# EUROPÄISCHE PATENTSCHRIFT

(11) **EP 1 231 453 B1**
(45) Veröffentlichungstag und Bekanntmachung des Hinweises auf die Patenterteilung: **19.04.2017**
(21) Anmeldenummer: 02001186.2
(22) Anmeldetag: 29.01.2002
(51) Int. Cl.: G01F 23/284

(54) **Verfahren, Auswerteeinrichtung und Füllstandmessgerät zum berührungslosen Ermitteln einer Überfüllung eines Behälters**
Method, evaluation apparatus and filling level detection device for the contactfree determination of container overfilling
Procédé, dispositif d'évaluation et dispositif de mesure de niveau de fluide pour déterminer sans contact le sur-remplissage d'un récipient

(30) Priorität: 08.02.2001 DE 10105662
(43) Veröffentlichungstag der Anmeldung: 14.08.2002
(73) Patentinhaber: VEGA Grieshaber KG, 77709 Wolfach (DE)
(72) Erfinder: Gaiser, Martin, 72275 Alpirsbach (DE)
(74) Vertreter: Maiwald Patentanwalts GmbH

(56) Entgegenhaltungen:
- DE-A- 4 332 071
- DE-C- 4 218 303

## Beschreibung

Die Erfindung betrifft allgemein ein Verfahren zum berührungslosen Ermitteln einer Überfüllung eines mit einem Füllgut befüllten Behälters, bei dem aus an einer Füllgutoberfläche reflektierten Echosignalen eine Hüllkurve generiert wird. Ferner betrifft die Erfindung eine Auswerteinrichtung zur Durchführung eines derartigen Verfahrens und ein Füllstandmessgerät, das mit einer derartigen Auswerteeinrichtung ausgestattet ist. Füllstandmessgeräte der hier interessierenden Art arbeiten insbesondere nach dem sogenannten Impulsechoprinzip und tasten ein reflektiertes Echosignal ab.

Füllstandmesseinrichtungen, die nach dem Impulsechoprinzip arbeiten und ein reflektiertes Echosignal abtasten, erzeugen aus dem abgetasteten Echosignal eine Reihe von Informationen zu jedem Echo im Echobild bzw. der sogenannten Hüllkurve. Die Erzeugung einer Hüllkurve aus Echosignalen ist hinlänglich bekannt und dementsprechend bedarf es hier keinen weiteren Erläuterungen zu dieser Technik (siehe beispielsweise: DE 44 07 369 C2; M. Scholnik, "Introduction to Radar Systems, 2. Auflage, 1980, McGraw-Hill; Peter Devine, "Radar level measurement - the user's guide", VEGA Controls Ltd., 2000, ISBN 0-9538920-0-X).

### Hintergrund der Erfindung

Füllstandmessgeräte bzw. -Sensoren, die durch Vermessung einzelner Echos in einer Hüllkurve die Füllstandhöhe ermitteln, sind bekannt. So wird die Hüllkurve in spezieller Weise beispielsweise mit Tiefpassfiltern, insbesondere einem Pull-Down-Tiefpassfilter untersucht. So werden die Echos in Bereichen gesucht, die zuvor durch Schnittpunkt einer Detektionsschwelle mit dem Echosignal festgelegt wurden. So zeichnet sich ein Echo in der Hüllkurve durch verschiedene Merkmale aus, wie beispielsweise Amplitude, Echobreite bei einer bestimmten Amplitude unter dem Maximum und Steigung des abgetasteten Echosignals vor dem Maximum. Auf diese Weise wird das eigentliche Nutzecho, d. h. das Echo, das von der tatsächlichen Füllgutoberfläche reflektiert wurde, ermittelt, insbesondere getrennt von den anderen Echos und dem abklingenden Sendesignal.

Bei dieser Art der Signalverarbeitung tritt im Nahbereich des Sensors das Problem auf, dass Echos mit dem noch nicht abgeklungenen Sendesignal interferieren. Bei Füllstandssensoren ist dementsprechend ab einer bestimmten Füllstandshöhe eines zu überwachenden Behälters keine eindeutige Aussage über die Füllstandshöhe mehr ermittelbar. Es kann unter Umständen sogar zu Fehlmessungen kommen. Sobald dieser Zustand auftritt, ist dies als Überfüllung zu erkennen, was aber bisher Schwierigkeiten macht.

Aus der EP 0 871 019 A1 ist ein Verfahren zur Feststellung einer Überfüllung bei der Messung eines Füllstands mit Hilfe eines Ultraschallwandlers bekannt. Bei diesem Verfahren wird eine Überfüllung festgestellt, wenn der Ultraschallwandler in dem Füllgut, hier eine Flüssigkeit, eintaucht bzw. hiervon bedeckt ist. Zur Feststellung der Überfüllung wird das durch das Nachschwingen des Ultraschallwandlers nach dem Ende jedes Ultraschall-Sendeimpulses erzeugte abklingende Ausgangssignal des Ultraschallwandlers ausgewertet. Dabei wird die Tatsache ausgenutzt, dass die Nachschwingdauer wegen der besseren Ankopplung des Ultraschallwandlers an die Flüssigkeit als an Luft kürzer ist, wenn der Ultraschallwandler von der Flüssigkeit bedeckt ist. Technisch umgesetzt wird dieses Verfahren, indem die Dauer des Nachschwingens des Ultraschallwandlers bis zum Abfall auf einen vorbestimmten Amplitudenwert mit einem vorgegebenen Zeitgrenzwert verglichen wird. Als Alternative wird die Nachschwingamplitude des Ausgangssignals des Ultraschallwandlers in einem vorbestimmten Zeitpunkt nach dem Ende des Wechselspannungsimpulses mit einem vorgegebenen Schwellenwert verglichen, der so bemessen ist, dass er unterschritten wird, wenn der Ultraschallwandler von der Flüssigkeit bedeckt ist. Eine weitere Alternative besteht darin, dass die Nachschwingamplitude des Ausgangssignals des Ultraschallwandlers in einem vorbestimmten Zeitfenster nach dem Ende des Wechselspannungsimpulses integriert wird und der Integrationswert mit einem vorgegebenen Schwellenwert verglichen wird, der so bemessen ist, dass er unterschritten wird, wenn der Ultraschallwandler von Flüssigkeit bedeckt ist.

Zusammenfassend ist festzustellen, dass allen in dieser Druckschrift offenbarten Verfahren gemein ist, dass ein bestimmter Schwellenwert oder Zeitgrenzwert unterschritten sein muss, um eine Überfüllung festzustellen. Insbesondere basieren alle Verfahren auf dem technischen Effekt, dass ein Ultraschallwandler dann wesentlich schneller abklingt, wenn er in eine Flüssigkeit eintaucht, als wenn er in Luft schwingt. Genau dieser Effekt wird nun zur Feststellung einer Überfüllung herangezogen. Was mit den ausgesandten Echos passiert, bleibt unbeobachtet. Damit ist diese Art der Feststellung einer Überfüllung nur bei Ultraschallwandlern anwendbar und darüber hinaus nur zuverlässig, wenn eine Überfüllung mit dem Bedecken bzw. Eintauchen in Flüssigkeit gleichzusetzen ist. Entsprechend ist aber diese Art der Feststellung einer Überfüllung nicht für verschiedene Füllstandsmessgeräte wie beispielsweise Radarsensoren anwendbar, da die Bedeckung der Radarantenne mit Füllgut zu einer starken Reflexion des Signals und damit zu einer Erhöhung der Amplitude führt.

Eine ähnliche Anordnung ist aus der DE 195 38 678 A1 ersichtlich. Schließlich sei noch allgemein auf die DE 198 17 378 A1 hingewiesen, die allgemein eine Füllstandsmessvorrichtung offenbart, die gegenüber bekannten Schwimmerschaltern unempfindlicher und wartungsfreundlicher ist, wozu der Pegel eines Materials über Reflexionssignale elektromagnetischer Strahlung erfasst wird, hier insbesondere ein sogenanntes TDR-Füllstandsmessgerät darstellt.

### Darstellung der Erfindung

Das der Erfindung zugrundeliegende technische Problem besteht darin, ein Verfahren zur Feststellung einer Überfüllung eines mit einem Füllguts befüllten Behälters bereitzustellen. Es soll insbesondere eine Möglichkeit geschaffen werden, dass ein insbesondere nach dem Impulsechoprinzip arbeitendes und ein reflektiertes Echosignal abtastendes Füllstandgerät automatisch eine Überfüllung eines Behälters feststellen kann.

Dieses technische Problem wird durch ein Verfahren, durch eine Auswerteinrichtung wie auch durch ein Füllstandmessgerät mit den Merkmalen der unabhängigen und nebengeordneten Ansprüche gelöst.

Der Erfindung liegt der Gedanke zugrunde, die im Nahbereich des Echosignals auftretenden großen Signalamplituden dazu zu nutzen, eine Überfüllung festzustellen. So wird erfindungsgemäß aus an einer Füllgutoberfläche reflektierten Echosignalen eine Hüllkurve generiert. Die Echosignalamplitude wird in einem vorbestimmten Nahbereich der Hüllkurve integriert und die Integrationssumme wird mit einem vorbestimmten Vergleichswert verglichen. Bei Überschreiten des vorbestimmten Vergleichswertes wird ein die Überfüllung des Behälters repräsentierendes Signal ausgegeben.

Die Echosignalamplitude wird in dem vorbestimmten Nahbereich integriert.

Handelt es sich bei dem Sendesignal um einen Radarimpuls eines Radarsensors, so ist es vorteilhaft, den vorbestimmten Nahbereich in Abhängigkeit von der Sendesignalfrequenz festzulegen. Insbesondere ist es auch vorteilhaft, den vorbestimmten Nahbereich in Abhängigkeit von der Art des Füllgutes festzulegen, d. h. je nachdem ob es sich bei dem Füllgut um Flüssigkeit oder um Schüttgut handelt. Bei der Auswertung von Radarimpulsen eines Radar-Füllstandsmessgeräts ist es insbesondere von Vorteil, den vorbestimmten Nahbereich zusätzlich auch in Abhängigkeit von der Art der verwendeten Antenne zum Senden und Empfangen der Radarimpulse festzulegen. Je nachdem ob es sich um eine Stab-oder Hornantenne handelt, ist der Nahbereich, der hier interessant ist, unterschiedlich festzulegen.

Falls es sich bei den auszuwertenden Signalen um Ultraschallsignale handelt, ist es von Vorteil, den vorbestimmten Nahbereich in Abhängigkeit von dem Aufbau des Schallwandlers zum Senden und Empfangen von Ultraschallimpulsen und der Sendefrequenz festzulegen.

Insbesondere ist es zweckmäßig, den Nahbereich so festzulegen, dass er sich vom Anfang der Hüllkurve bis zu derjenigen Stelle der Hüllkurve erstreckt, an der der Amplitudenwert um einen vorbestimmten Sicherheitsabstand höher ist als das Systemrauschen. So kann beispielsweise das allgemeine Systemrauschen bei einer Sendefrequenz von 24 GHz bei etwa 20dB liegen. Wählt man nun beispielsweise einen Sicherheitsabstand von 10dB, so erstreckt sich der Nahbereich vom Anfang der Hüllkurve bis zu derjenigen Stelle, an der der Amplitudenwert wieder 30dB beträgt. In dem vorgenannten Beispiel betrüge der zu untersuchende Nahbereich somit ungefähr 1 m.

Die Ausgabe eines eine Überfüllung des Behälters repräsentierenden Signals ist grundsätzlich nur dann sinnvoll, wenn der sichere Bereich zur Messung der Füllstandhöhe verlassen wird. Dementsprechend ist es insbesondere zweckmäßig, die Entfernung eines Nutzechos mit einem vorbestimmten Entfernungswert zu vergleichen, und nur für den Fall, dass die Entfernung des Nutzechos kleiner ist als der vorbestimmte Entfernungswert, ein die Überfüllung des Behälters repräsentierendes Signal auszugeben.

Andererseits kann es zusätzlich zweckmäßig sein, den Signal-Rauschabstand mit einem vorbestimmten Signal-Rauschabstand zu vergleichen, und nur für den Fall, dass der Signal-Rauschabstand kleiner ist als der vorbestimmte Signal-Rauschabstandswert, ein die Überfüllung des Behälters repräsentierendes Signal auszugeben. Unter dem Begriff Signal-Rauschabstand, auch Mess-Sicherheit genannt, ist diejenige Amplitude des Füllstandechos über dem Systemrauschen oder dem abklingenden Sendesignal zu verstehen.

Insbesondere ist es vorteilhaft, wenn bei Feststellung einer Überfüllung des Behälters eine Störmeldung ausgegeben wird, die dann von weiteren Systemen verwendet wird. Alternativ ist es auch möglich, ein Störmelderelais zu schalten, wenn die Feststellung einer Überfüllung des Behälters durch die vorgenannten Maßnahmen ermittelt wird. Eine weitere Alternative besteht darin, vorzugsweise bei Feststellung einer Überfüllung des Behälters solange einen Ausgangswert zu halten, bis keine Überfüllung mehr vorliegt.

Eine erfindungsgemäße Auswerteeinrichtung zum berührungslosen Ermitteln einer Überfüllung eines mit Füllgut gefüllten Behälters durch Auswerten von an einer Füllgutoberfläche reflektierten Echosignalen einer Füllstandmessvorrichtung umfasst eine Aufbereitungseinheit, die die Signalechoamplitude in einem vorbestimmten Nahbereich einer Hüllkurve integriert und die Integrationssumme mit einem vorbestimmten Vergleichswert vergleicht. Bei Überschreiten des vorbestimmten Vergleichswertes gibt diese Aufbereitungseinheit ein die Überfüllung des Behälters repräsentierendes Signal aus.

Grundsätzlich kann eine erfindungsgemäße Auswerteeinrichtung als eigenständige Einheit ausgebildet sein, die räumlich körperlich vom eigentlichen Füllstandmessgerät getrennt ist. So wäre es beispielsweise denkbar, eine solche Auswerteeinrichtung in einem Leitstand zu integrieren. Je nach Gegebenheiten ist es aber auch äußerst vorteilhaft, eine solche Auswerteeinrichtung unmittelbar in dem Füllstandsmessgerät zu integrieren. In diesem Fall bildet die Auswerteeinrichtung einen Teil des Füllstandmessgeräts. Über eine bekannte Kommunikationsleitung wird dann an weitere Einrichtungen, wie z. B. ein Leitstand, das Signal einer Überfüllung ausgegeben, oder, wenn keine Überfüllung vorliegt, ein die Füllstandhöhe repräsentierendes Signal.

### Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben. Es zeigt:
- Fig. 1: eine äußerst schematische Querschnittsansicht eines mit einem Füllgut befüllten Behälters und im Deckenbereich des Behälters angebrachten Füllstandmessgeräts,
- Fig. 2: eine schematische Darstellung eines erfindungsgemäßen Füllstandmessgeräts,
- Fig. 3: eine beispielhafte Hüllkurve eines Echosignals, bei der die Amplitude empfangener Echos über die Entfernung vom Füllstandmessgerät aufgetragen ist,
- Fig. 4: ein Flussdiagramm eines ersten Ausführungsbeispiels für ein erfindungsgemäßes Verfahren,
- Fig. 5: eine beispielhafte Hüllkurve für einen überfüllten Behälter,
- Fig. 6: ein Flussdiagramm eines beispielhaften erfindungsgemäßen Verfahrens.

### Beschreibung bevorzugter Ausführungsbeispiele der Erfindung

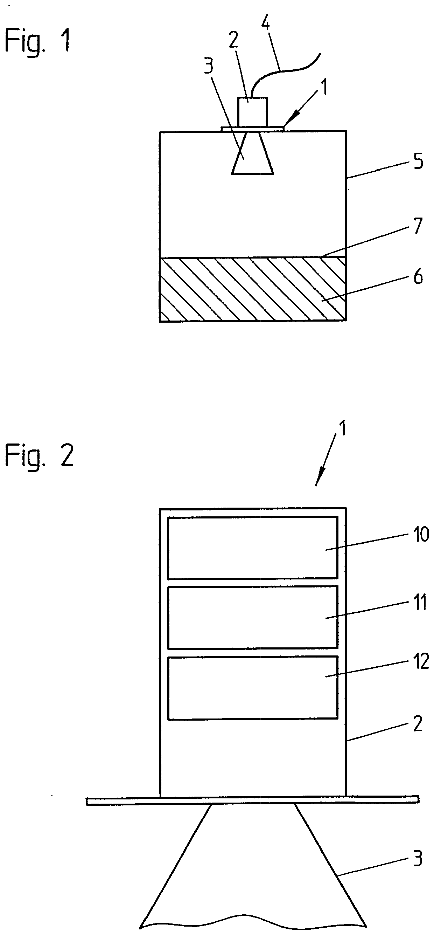

Aus der schematischen Darstellung gemäß der Fig. 1 ist ersichtlich, dass ein Füllstandmessgerät 1 im Deckenbereich eines Behälters 5 montiert ist. In dem Behälter 5 befindet sich ein Füllgut 6, Schüttgut oder Flüssigkeit, das eine Füllgutoberfläche 7 ausbildet.

Das im Behälter 5 montierte Füllstandmessgerät 1 umfasst ein Gehäuse 2 und eine Hornantenne 3. Es ist über ein Kabel 4, insbesondere eine sog. 4-20 mA-Zweidrahtschleife, an eine hier nicht dargestellte Stromversorgungs- und Kommunikationseinrichtung angeschlossen.

In der äußerst schematischen Darstellung gemäß der Fig. 2 ist das Füllstandmessgerät 1 mit einer Auswerteeinrichtung 10, einer Sendeeinrichtung 11 und einer Empfängereinrichtung 12 dargestellt. Mit der Sendeeinrichtung 11 werden kurze Radarimpulse im Mikrowellenbereich über die Hornantenne 3 in Richtung der Füllgutoberfläche 7 ausgesendet. An der Füllgutoberfläche 7 werden diese Signale reflektiert und über die gleiche Antenne 3 empfangen. In der Empfängereinrichtung 12 werden diese gemäß dem Stand der Technik weiter verarbeitet und in der Auswerteeinrichtung 10 ausgewertet. Hierzu wird in bekannter Weise eine Hüllkurve aus den einzelnen Echosignalen generiert. Diese Hüllkurve wird dann wiederum mittels mathematischer Methoden näher untersucht, insbesondere wie es in den nachfolgenden Flussdiagrammen veranschaulicht ist.

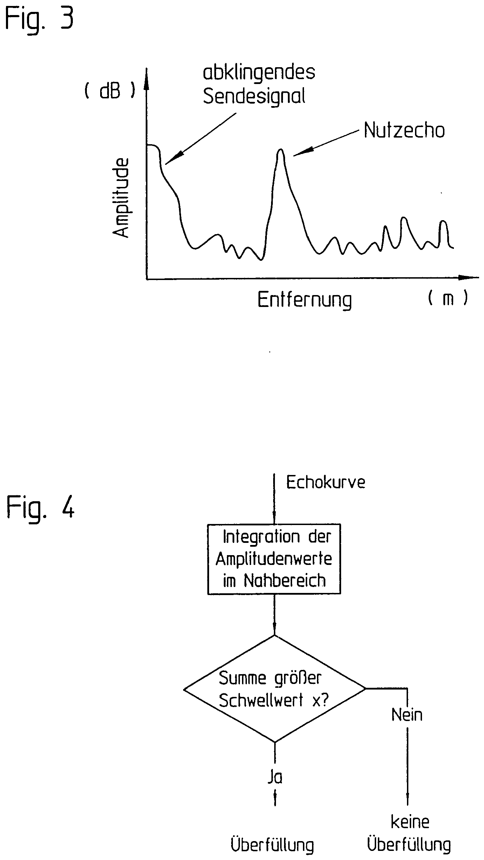

In der Fig. 3 ist ein Beispiel einer Hüllkurve gezeigt, bei dem die Amplitude eines Echosignals über die Entfernung aufgetragen ist. Wie hier ersichtlich, ist im Nahbereich des Füllstandmessgeräts ein abklingendes Sendesignal in der Hüllkurve enthalten. In der Hüllkurve ist eindeutig ein Nutzecho erkennbar, das für die Entfernung des Füllguts vom Füllstandmessgerät kennzeichnend ist. Bei dieser beispielhaften Hüllkurve ist also keine Überfüllung gegeben, sondern eindeutig ein Nutzecho ermittelbar, aus dessen Daten die Füllstandhöhe im Behälter errechnet werden kann.

Gemäß dem Flussdiagramm der Fig. 4 werden aus dieser Hüllkurve bzw. Echokurve im Nahbereich die Amplitudenwerte integriert. Die Summe dieser Integration wird mit einem Schwellwert x verglichen. Ist diese Summe größer als der Schwellwert x, wird ein die Überfüllung repräsentierendes Signal ausgegeben, andernfalls wird kein entsprechendes Signal ausgegeben.

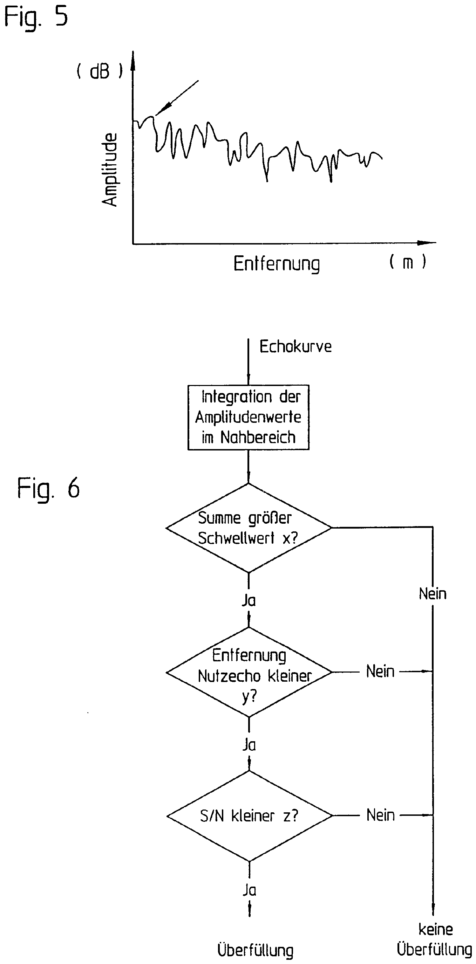

Eine Überfüllung ist beispielsweise bei der Hüllkurve gemäß der Fig. 5 gegeben. Hier ist eindeutig kein Nutzecho mehr ermittelbar. Im sog. Nahbereich überdecken sich das abklingende Sendesignal und die Reflexionen von der Füllgutoberfläche. Aus dieser großen Signalamplitude ist also eindeutig auf eine Überfüllung zu schließen, die Integrationssumme ist hier größer als ein Schwellwert x.

Bei einem weiteren Beispiel eines erfindungsgemäßen Verfahrens gemäß dem Flussdiagramm der Fig. 6 erfolgt wiederum eine Integration der Amplitudenwerte im Nahbereich. Hier wird überprüft, ob die Summe größer ist als der Schwellwert x. Wenn dies zu bejahen ist, wird weiterhin überprüft, ob die Entfernung eines Nutzechos kleiner ist als ein weiterer Schwellwert y. Ist dies zu verneinen, so wird keine Überfüllung ausgegeben. Ist die Entfernung kleiner dem Schwellwert y, so wird nochmals überprüft, ob der sog. Signal-Rauschabstand des Nutzechos kleiner ist als ein weiterer Schwellwert z. Ist dies der Fall, so wird ein die Überfüllung repräsentierendes Signal ausgegeben, andernfalls wird keine Überfüllung gemeldet.

Selbstverständlich ist es auch möglich, wie bereits eingangs erläutert, diese drei aufeinanderfolgenden Überprüfungen auch in anderer Kombination durchzuführen.

## Patentansprüche

1. Verfahren zum berührungslosen Ermitteln einer Überfüllung eines mit einem Füllgut (6) befüllten Behälters (5), bei dem
- aus an einer Füllgutoberfläche (7) reflektierten Echosignalen eine Hüllkurve generiert wird,
- die Echosignalamplitude in einem vorbestimmten Nahbereich der Hüllkurve integriert wird und die Integrationssumme mit einem vorbestimmten Vergleichswert (x) verglichen wird, und
- bei Überschreiten des vorbestimmten Vergleichswertes (x) ein die Überfüllung des Behälters (5) repräsentierendes Signal ausgegeben wird;
wobei der vorbestimmte Vergleichswert derart gewählt ist, dass er überschritten wird, wenn sich das abklingende Sendesignal und an der Füllgutoberfläche reflektierte Signale im Nahbereich überdecken.

2. Verfahren zum berührungslosen Ermitteln einer Überfüllung eines mit einem Füllgut (6) befüllten Behälters (5), bei dem
- aus an einer Füllgutoberfläche (7) reflektierten Echosignalen eine Hüllkurve generiert wird,
- die Entfernung eines Nutzechos mit einem vorbestimmten Entfernungswert verglichen wird und/oder ein Signal-Rauschabstand eines Nutzechos mit einem vorbestimmten Signal-Rauschabstandswert verglichen wird,
- die Echosignalamplitude in einem vorbestimmten Nahbereich der Hüllkurve integriert wird und die Integrationssumme mit einem vorbestimmten Vergleichswert (x) verglichen wird, und
- bei Überschreiten des vorbestimmten Vergleichswertes (x) und nur für den Fall, dass die Entfernung des Nutzechos kleiner ist als der vorbestimmte Entfernungswert und/oder dass der Signal-Rauschabstand kleiner ist als der vorbestimmte Signal-Rauschabstandswert, ein die Überfüllung des Behälters repräsentierendes Signal ausgegeben wird;
wobei der vorbestimmte Vergleichswert derart gewählt ist, dass er überschritten wird, wenn sich das abklingende Sendesignal und an der Füllgutoberfläche reflektierte Signale im Nahbereich überdecken.

3. Verfahren nach Anspruch 1 oder 2,
**dadurch gekennzeichnet, dass** der vorbestimmte Nahbereich in Abhängigkeit von der Sendesignalfrequenz festgelegt wird.

4. Verfahren nach einem der voranstehenden Ansprüche,
**dadurch gekennzeichnet, dass** der vorbestimmte Nahbereich in Abhängigkeit von der Art des Füllgutes festgelegt wird.

5. Verfahren nach einem der Ansprüche 1-4,
**dadurch gekennzeichnet, dass** der vorbestimmte Nahbereich in Abhängigkeit von der verwendeten Antenne zum Senden und Empfangen von Radarimpulsen festgelegt wird.

6. Verfahren nach einem der Ansprüche 1-4,
**dadurch gekennzeichnet, dass** der vorbestimmte Nahbereich in Abhängigkeit von dem Aufbau des Schallwandlers zum Senden und Empfangen von Ultraschallimpulsen festgelegt wird.

7. Verfahren nach einem der Ansprüche 1-6,
**dadurch gekennzeichnet, dass** der Nahbereich sich vom Anfang der Hüllkurve bis zu derjenigen Stelle der Hüllkurve erstreckt, an der der Amplitudenwert um einen vorbestimmten Sicherheitsabstand höher ist als das Systemrauschen.

8. Verfahren nach einem der voranstehenden Ansprüche,
**dadurch gekennzeichnet, dass** der Signal-Rauschabstand mit einem vorbestimmten Signal-Rauschabstandswert verglichen wird, und nur für den Fall, dass der Signal-Rauschabstand kleiner ist als der vorbestimmte Signal-Rauschabstandswert, ein die Überfüllung des Behälters repräsentierendes Signal ausgegeben wird.

9. Verfahren nach einem der Ansprüche 1-8,
**dadurch gekennzeichnet, dass** bei Feststellung einer Überfüllung des Behälters (5) eine Störmeldung ausgegeben wird.

10. Verfahren nach einem der Ansprüche 1-8,
**dadurch gekennzeichnet, dass** bei Feststellung einer Überfüllung des Behälters (5) ein Störmelderelais geschaltet wird.

11. Verfahren nach einem der Ansprüche 1-8,
**dadurch gekennzeichnet, dass** bei Feststellung einer Überfüllung des Behälters (5) solange ein Ausgangswert gehalten wird, bis keine Überfüllung mehr vorliegt.

12. Auswerteeinrichtung zum berührungslosen Ermitteln einer Überfüllung eines mit Füllgut (6) gefüllten Behälters (5) durch Auswerten von an einer Füllgutoberfläche (7) reflektierten Echosignalen einer Füllstandmessvorrichtung (1), mit einer Aufbereitungseinheit (10), die die Echosignalamplitude in einem vorbestimmten Nahbereich einer Hüllkurve, die aus an einer Füllgutoberfläche (7) reflektierten Echosignalen generiert ist, integriert und die Integrationssumme mit einem vorbestimmten Vergleichswert (x) vergleicht, und bei Überschreiten des vorbestimmten Vergleichswertes (x) ein die Überfüllung des Behälters (5) repräsentierendes Signal ausgibt, wobei der vorbestimmte Vergleichswert derart gewählt ist, dass er überschritten wird, wenn sich das abklingende Sendesignal und an der Füllgutoberfläche reflektierte Signale im Nahbereich überdecken.

13. Auswerteeinrichtung zum berührungslosen Ermitteln einer Überfüllung eines mit Füllgut (6) gefüllten Behälters (5) durch Auswerten von an einer Füllgutoberfläche (7) reflektierten Echosignalen einer Füllstandmessvorrichtung (1), mit einer Aufbereitungseinheit (10), die die Echosignalamplitude in einem vorbestimmten Nahbereich einer Hüllkurve, die aus an einer Füllgutoberfläche (7) reflektierten Echosignalen generiert ist, integriert und die Integrationssumme mit einem vorbestimmten Vergleichswert (x) vergleicht, wobei eine Vergleichseinrichtung vorhanden ist, in der der Signal-Rauschabstand mit einem vorbestimmten Signal-Rauschabstandswert vergleichbar ist und/oder in der die Entfernung eines Nutzechos mit einem vorbestimmten Entfernungswert vergleichbar ist, und bei Überschreiten des vorbestimmten Vergleichswertes (x) und nur für den Fall, dass der Signal-Rauschabstand kleiner ist als der vorbestimmte Signal-Rauschabstandswert und/oder dass die Entfernung des Nutzechos kleiner ist als der vorbestimmte Entfernungswert, ein die Überfüllung des Behälters (5) repräsentierendes Signal ausgegeben wird, wobei der vorbestimmte Vergleichswert derart gewählt ist, dass er überschritten wird, wenn sich das abklingende Sendesignal und an der Füllgutoberfläche reflektierte Signale im Nahbereich überdecken.

14. Auswerteeinrichtung nach einem oder mehreren der Ansprüche 12-13,
**dadurch gekennzeichnet, dass** der vorbestimmte Nahbereich in Abhängigkeit von der Sendesignalfrequenz festgelegt ist.

15. Auswerteeinrichtung nach einem oder mehreren der Ansprüche 12-14,
**dadurch gekennzeichnet, dass** der vorbestimmte Nahbereich in Abhängigkeit von der Art des Füllgutes festgelegt ist.

16. Auswerteeinrichtung nach einem oder mehreren der Ansprüche 12-15, **dadurch gekennzeichnet, dass** der vorbestimmte Nahbereich in Abhängigkeit von der verwendeten Antenne zum Senden und Empfangen von Radarimpulsen festgelegt ist.

17. Auswerteeinrichtung nach einem oder mehreren der Ansprüche 12-16, **dadurch gekennzeichnet, dass** der vorbestimmte Nahbereich in Abhängigkeit von dem Aufbau des Schallwandlers zum Senden und Empfangen von Ultraschallimpulsen festgelegt ist.

18. Auswerteeinrichtung nach einem oder mehreren der Ansprüche 12-17, **dadurch gekennzeichnet, dass** eine Ausgabeeinrichtung vorhanden ist, die bei Erhalt des die Überfüllung des Behälters (5) repräsentierenden Signals eine Störmeldung ausgibt.

19. Auswerteeinrichtung nach einem oder mehreren der Ansprüche 12-18, **dadurch gekennzeichnet, dass** eine Ausgabeeinrichtung vorhanden ist, die bei Erhalt des die Überfüllung des Behälters (5) repräsentierenden Signals ein Störmelderelais schaltet.

20. Auswerteeinrichtung nach einem oder mehreren der Ansprüche 12-18, **dadurch gekennzeichnet, dass** eine Ausgabeeinrichtung vorhanden ist, die bei Erhalt des die Überfüllung des Behälters (5) repräsentierenden Signals solange einen Ausgangswert hält, bis keine Überfüllung mehr vorliegt.

21. Füllstandmessgerät zum berührungslosen Ermitteln der Füllstandhöhe eines Füllgutes in einem Behälter (5), mit einer Auswerteeinrichtung nach einem oder mehreren der Ansprüche 12-20.

## Claims

1. Method for a non-contact determination of an overfilling of a receptacle (5), the receptacle (5) being filled with a filling product (6), wherein
- an envelope curve is generated utilizing echo signals reflected from a surface (7) of the filling product (6),
- the amplitude of the echo signal is integrated in a predetermined short range of the envelope curve and the integration sum is compared to a predetermined comparison value (x), and
- when exceeding the predetermined comparison value (x) a signal indicative of overfilling of the receptacle (5) is outputted;
wherein the predetermined comparison value is chosen in a way, that it is exceeded, if the lessening sending signal and signals reflecting at the surface of the filling product are overlapping in the short range.

2. A method for a non-contact determination of an overfilling of a receptacle (5), the receptacle (5) being filled with a filling product (6), wherein
- an envelope curve is generated utilizing echo signals reflected from a surface (7) of the filling product (6),
- the distance of a useful echo is compared to a predetermined distance value and/or a signal noise distance of a useful echo is compared to a predetermined noise distance value,
- the echo signal amplitude is integrated in a predetermined short range of the envelope curve and the integration sum is compared with a predetermined comparison value (x), and
- when exceeding the predetermined comparison value (x) and only if the distance of the useful echo is smaller than the predetermined distance value and/or the signal noise distance is smaller than the predetermined noise distance value, a signal indicative of overfilling of the receptacle is outputted;
wherein the predetermined comparison value is chosen in a way, that it is exceeded, if the lessening sending signal and signals reflecting at the surface of the filling product are overlapping in the short range.

3. Method according to claim 1 or 2,
**characterized in that** the predetermined short range is fixed depending on the transmission signal frequency.

4. Method according to one of the preceding claims,
**characterized in that** the predetermined short range is fixed depending on the type of the filling product.

5. Method according to one of the claims 1-4,
**characterized in that** the predetermined short range is fixed depending on the used antenna for transmitting and receiving radar pulses.

6. Method according to one of the claims 1-4,
**characterized in that** the predetermined short range is fixed depending on a configuration of a sound transducer for transmitting and receiving ultrasonic pulses.

7. Method according to one of the claims 1-6,
**characterized in that** the predetermined short range extends from a beginning of the envelope curve up to a point on the envelope curve at which an amplitude value exceeds a system noise value by at least a predetermined safety distance.

8. Method according to one of the preceding claims,
**characterized in that** the signal noise distance is compared to a predetermined signal noise distance value, and only if the signal noise distance is smaller than the predetermined noise distance value, a signal indicative of overfilling of the receptacle is outputted.

9. Method according to one of the claims 1-8,
**characterized in that** a trouble message is outputted when an overfilling of the receptacle (5) is detected.

10. Method according to one of the claims 1-8,
**characterized in that** a trouble alarm relay is activated when an overfilling of the receptacle (5) is detected.

11. Method according to one of the claims 1-8,
**characterized in that**, when an overfilling of the receptacle (5) is detected, an initial value is maintained until an overfilling is no longer present.

12. Evaluation arrangement for a non-contact determination of overfilling of a receptacle (5), the receptacle being filled with a filling product (6), by analyzing echo signals of the filling level measuring device, the echoes being reflected from a surface (7) of the filling product (6), with a processing unit (10) which integrates the amplitude of the echo signal in a predetermined short range of an envelope curve generated from echo signals reflected from a surface (7) of the filling product (6), and which compares the integration sum to a predetermined comparison value (x), and when exceeding the predetermined comparison value (x) puts out a signal indicative of overfilling of the receptacle (5), wherein the predetermined comparison value is chosen in a way, that it is exceeded, if the lessening sending signal and signals reflecting at the surface of the filling product are overlapping in the short range.

13. Evaluation arrangement for a non-contact determination of overfilling of a receptacle (5), the receptacle being filled with a filling product (6), by analyzing echo signals of the filling level measuring device, the echoes being reflected from a surface (7) of the filling product (6), with a processing unit (10) which integrates the amplitude of the echo signal in a predetermined short range of an envelope curve generated from echo signals reflected from a surface (7) of the filling product (6), and which compares the integration sum to a predetermined comparison value (x), wherein a comparing device is provided, in which a signal noise distance of a useful echo can be compared to a predetermined noise distance value, and/or in which the distance of a useful echo can be compared to a predetermined distance value, and only in the case that the signal noise distance is smaller than the predetermined noise distance value and/or the distance of the useful echo is smaller than the predetermined distance value, a signal indicative of overfilling of the receptacle is outputted, wherein the predetermined comparison value is chosen in a way, that it is exceeded, if the lessening sending signal and signals reflecting at the surface of the filling product are overlapping in the short range.

14. Evaluation arrangement according to one or more of the claims 12-13, **characterized in that** the predetermined short range is fixed depending on the transmission signal frequency.

15. Evaluation arrangement according to one or more of the claims 12-14, **characterized in that** the predetermined short range is fixed depending on the type of the filling product.

16. Evaluation arrangement according to one or more of the claims 12-15, **characterized in that** the predetermined short range is fixed depending on the used antenna for transmitting and receiving radar pulses.

17. Evaluation arrangement according to one or more of the claims 12-16, **characterized in that** the predetermined short range is fixed depending on a configuration of a sound transducer for transmitting and receiving ultrasonic pulses.

18. Evaluation arrangement according to one or more of the claims 12-17, **characterized in that** an output device is provided, which puts out a trouble message when a signal representing an overfilling of the receptacle (5) is received.

19. Evaluation arrangement according to one or more of the claims 12-18, **characterized in that** an output device is provided, which activates a trouble alarm relay when a signal representing an overfilling of the receptacle (5) is received.

20. Evaluation arrangement according to one or more of the claims 12-18, **characterized in that** an output device is provided, which when an overfilling of the receptacle (5) is detected, maintains an initial value until an overfilling is no longer present.

21. Filling level measuring device for non-contact determination of a filling level of a filling product in a receptacle (5) with an evaluation arrangement according to one or more of the claims 12 to 20.

## Revendications

1. Procédé de détermination sans contact d'une surcharge d'un récipient (5) rempli d'une charge (6), dans lequel
- une courbe d'enveloppe est générée à partir de signaux d'échos réfléchis sur une surface (7) de la charge,
- l'amplitude des signaux d'échos est intégrée dans un domaine proche prédéfini de la courbe d'enveloppe et la somme d'intégration est comparée à une valeur de référence (x) prédéfinie, et
- un signal représentant la surcharge du récipient (5) est émis en présence d'un dépassement par le haut de la valeur de référence (x) prédéfinie ;
la valeur de référence prédéfinie étant choisie de telle sorte qu'elle est dépassée par le haut lorsque le signal d'émission décroissant et des signaux réfléchis sur la surface de la charge se recouvrent dans le domaine proche.

2. Procédé de détermination sans contact d'une surcharge d'un récipient (5) rempli d'une charge (6), dans lequel
- une courbe d'enveloppe est générée à partir de signaux d'échos réfléchis sur une surface (7) de la charge,
- la distance d'un écho utile est comparée à une valeur de distance prédéfinie et/ou un écart signal - bruit d'un écho utile est comparé à une valeur d'écart signal - bruit prédéfinie,
- l'amplitude des signaux d'échos est intégrée dans un domaine proche prédéfini de la courbe d'enveloppe et la somme d'intégration est comparée à une valeur de référence prédéfinie (x), et
- un signal représentant la surcharge du récipient est émis en présence d'un dépassement par le haut de la valeur de référence prédéfinie (x) et uniquement dans le cas où la distance de l'écho utile est inférieure à la valeur de distance prédéfinie et/ou l'écart signal - bruit est plus faible que la valeur d'écart signal - bruit prédéfinie ;
la valeur de référence prédéfinie étant choisie de telle sorte qu'elle est dépassée par le haut, lorsque le signal d'émission décroissant et des signaux réfléchis sur la surface de la charge se recouvrent dans le domaine proche.

3. Procédé selon l'une des revendications 1 et 2,
**caractérisé en ce que** le domaine proche prédéfini est fixé en fonction de la fréquence du signal d'émission.

4. Procédé selon l'une des revendications précédentes, **caractérisé en ce que** le domaine proche prédéfini est fixé en fonction de la nature de la charge.

5. Procédé selon l'une des revendications 1 - 4,
**caractérisé en ce que** le domaine proche prédéfini est fixé en fonction de l'antenne utilisée pour l'émission et la réception d'impulsions radar.

6. Procédé selon l'une des revendications 1 - 4,
**caractérisé en ce que** le domaine proche prédéfini est fixé en fonction de la structure du transducteur acoustique pour l'émission et la réception d'impulsions ultrasonores.

7. Procédé selon l'une des revendications 1 - 6,
**caractérisé en ce que** le domaine proche s'étend du début de la courbe d'enveloppe jusqu'à la position de cette dernière, à laquelle la valeur d'amplitude est plus élevée d'un écart de sécurité prédéfini que le bruit de système.

8. Procédé selon l'une des revendications précédentes, **caractérisé en ce que** l'écart signal - bruit est comparé à une valeur d'écart signal - bruit prédéfinie, et un signal représentant la surcharge du réservoir est émis uniquement dans le cas où l'écart signal - bruit est plus faible que la valeur d'écart signal - bruit prédéfinie.

9. Procédé selon l'une des revendications 1 - 8,
**caractérisé en ce qu'**une information d' anomalie est émise en cas de constat d'une surcharge du récipient (5).

10. Procédé selon l'une des revendications 1 - 8,
**caractérisé en ce qu**'un relais d'information d'anomalie est connecté en présence d'un constat d'une surcharge du récipient (5).

11. Procédé selon l'une des revendications 1 - 8,
**caractérisé en ce que,** en cas de constat d'une surcharge du récipient (5), une valeur d'origine est maintenue jusqu'à l'absence d'une surcharge.

12. Dispositif d'évaluation pour la détermination sans contact d'une surcharge d'un récipient (5), rempli d'une charge (6), par évaluation de signaux d'échos d'un dispositif de mesure de niveau (1), réfléchis sur une surface (7) de la charge, avec une unité de traitement (10), qui intègre l'amplitude des signaux d'échos dans un domaine proche prédéfini d'une courbe d'enveloppe, générée à partir de signaux d'échos réfléchis sur une surface (7) de la charge, et compare la somme d'intégration à une valeur de référence (x) prédéfinie, et émet un signal représentant la surcharge du récipient (5) en cas de dépassement par le haut de la valeur de référence (x) prédéfinie, la valeur de référence prédéfinie étant choisie de telle sorte qu'elle est dépassée par le haut, lorsque le signal d'émission décroissant et des signaux réfléchis sur la surface de la charge se recouvrent dans le domaine proche.

13. Dispositif d'évaluation pour la détermination sans contact d'une surcharge d'un récipient (5), rempli d'une charge (6), par évaluation de signaux d'échos d'un dispositif de mesure de niveau (1), réfléchis sur une surface (7) de la charge, avec une unité de traitement (10), qui intègre l'amplitude des signaux d'échos dans un domaine proche prédéfini d'une courbe d'enveloppe, générée à partir de signaux d'échos réfléchis sur une surface (7) de la charge, et compare la somme d'intégration à une valeur de référence (x) prédéfinie, un dispositif de comparaison étant prévu, dispositif dans lequel l'écart signal
- bruit est comparable à une valeur d'écart signal - bruit prédéfinie et/ou dans lequel la distance d'un écho utile est comparable à une valeur de distance prédéfinie, et un signal représentant la surcharge du récipient (5) est émis en cas de dépassement par le haut de la valeur de référence (x) prédéfinie et uniquement dans le cas où l'écart signal - bruit est plus faible que la valeur d'écart signal - bruit prédéfinie et/ou la distance de l'écho utile est plus faible que la valeur de distance prédéfinie, la valeur de référence prédéfinie étant choisie de telle sorte qu'elle est dépassée par le haut, lorsque le signal d'émission décroissant et des signaux réfléchis sur la surface de la charge se recouvrent dans le domaine proche.

14. Dispositif d'évaluation selon l'une ou plusieurs des revendications 12 - 13, **caractérisé en ce que** le domaine proche prédéfini est fixé en fonction de la fréquence du signal d'émission.

15. Dispositif d'évaluation selon l'une ou plusieurs des revendications 12 - 14, **caractérisé en ce que** le domaine proche prédéfini est fixé en fonction de la nature de la charge.

16. Dispositif d'évaluation selon l'une ou plusieurs des revendications 12 - 15, **caractérisé en ce que** le domaine proche prédéfini est fixé en fonction de l'antenne utilisée pour l'émission et la réception d'impulsions radar.

17. Dispositif d'évaluation selon l'une ou plusieurs des revendications 12 - 16, **caractérisé en ce que** le domaine proche prédéfini est fixé en fonction de la structure du transducteur acoustique pour l'émission et la réception d'impulsions ultrasonores.

18. Dispositif d'évaluation selon l'une ou plusieurs des revendications 12 - 17, **caractérisé en ce qu**'il est prévu un dispositif de sortie, qui émet une information d'anomalie lors de la réception du signal représentant la surcharge du récipient (5).

19. Dispositif d'évaluation selon l'une ou plusieurs des revendications 12 - 18, **caractérisé en ce qu**'il est prévu un dispositif de sortie, qui connecte un relais d'information d'anomalie lors de la réception du signal représentant la surcharge du récipient (5).

20. Dispositif d'évaluation selon l'une ou plusieurs des revendications 12 - 18, **caractérisé en ce qu**'il est prévu un dispositif de sortie qui maintient une valeur d'origine, lors de la réception du signal représentant la surcharge du récipient (5), jusqu'à l'absence d'une surcharge.

21. Appareil de mesure de niveau pour la détermination sans contact de la hauteur de niveau d'une charge dans un récipient (5), avec un dispositif d'évaluation selon l'une ou plusieurs des revendications 12 - 20.
